# EUROPÄISCHE PATENTSCHRIFT

(11) **EP 3 925 019 B1**
(45) Veröffentlichungstag und Bekanntmachung des Hinweises auf die Patenterteilung: **28.06.2023**
(21) Anmeldenummer: 20705624.3
(22) Anmeldetag: 06.02.2020
(51) Int. Cl.: H01M 10/04, H01M 10/653, H01M 10/613

(54) **VERFAHREN ZUM HERSTELLEN EINER TRAKTIONSBATTERIE EINES KRAFTFAHRZEUGS**
METHOD FOR PRODUCING A TRACTION BATTERY OF A MOTOR VEHICLE
PROCÉDÉ DE FABRICATION D'UNE BATTERIE DE TRACTION D'UN VÉHICULE À MOTEUR

(30) Priorität: 13.02.2019 DE 102019103570
(43) Veröffentlichungstag der Anmeldung: 22.12.2021
(73) Patentinhaber: Lisa Dräxlmaier GmbH, 84137 Vilsbiburg (DE)
(72) Erfinder: MAGUNIA, Robert, 84144 Geisenhausen (DE); RIESTER, Christoph, 85445 Obererding (DE); RÖMELSBERGER, Michael, 84323 Massing (DE); SEIDL, Stefan, 84028 Landshut (DE); UNVERRICHT, Michel, 84034 Landshut (DE); BRENDECKE, Felix, 71229 Leonberg (DE); STECK, Armin, 71272 Renningen (DE); GRÄF, Markus, 73760 Ostfildern (DE)
(86) Internationale Anmeldenummer: PCT/EP2020/052948
(87) Internationale Veröffentlichungsnummer: WO 2020/165012

(56) Entgegenhaltungen:
- EP-A1- 3 246 978
- CN-A- 106 129 448
- DE-A1-102018 005 234
- DE-B3-102013 007 252
- US-A- 5 776 208

## Beschreibung

Die hier vorliegende Erfindung betrifft ein Verfahren zum Herstellen einer Traktionsbatterie eines Kraftfahrzeugs.

Eine Traktionsbatterie eines Kraftfahrzeugs verfügt über ein Gehäuse sowie über mehrere Batteriemodule. Um die Batteriemodule zu kühlen, ist es bekannt, dass ein Gehäuse der Traktionsbatterie eine gekühlte Gehäusewand aufweist. Die gekühlte Gehäusewand verfügt insbesondere über einen von Kühlmittel durchströmten Kühlmittelkanal. Um einen effektiven Wärmeübergang von den Batteriemodulen auf die gekühlte Gehäusewand zu ermöglichen, ist es bereits bekannt, eine pastöse Wärmeleitmasse zwischen den Batteriemodulen und der gekühlten Gehäusewand anzuordnen.

Aus der DE 10 2016 001 145 A1 ist eine Traktionsbatterie mit einem Batteriegehäuse und in dem Batteriegehäuse aufgenommenen Batteriemodulen bekannt, wobei das Batteriegehäuse sowohl eine gekühlte Bodenwand als auch eine gekühlte Dachwand umfasst.

Aus der US 2016/0268657 A1 ist eine Batterieanordnung mit mehreren Batteriemodulen bekannt, wobei zwischen den Batteriemodulen und einer Kühlplatte sogenannten Kontaktmittel positioniert sind, die dem Wärmeübergang von den Batteriemodulen auf die Kühlplatte dienen.

Aus der EP 3 246 978 A1 ist der Aufbau eines Batteriemoduls einer Traktionsbatterie bekannt. Das Batteriemodul verfügt über mehrere Batteriezellen, die von einer Tragstruktur mit einer gekühlten Wand aufgenommen sind. Zwischen den Batteriezellen und der gekühlten Wand der Tragstruktur ist eine Wärmeleitmasse positioniert, die der Wärmeübertragung von den Batteriezellen auf die gekühlte Wand dient.

Des Weiteren offenbart die DE 10 2018 005 234 A1 ein Verfahren zum Herstellen einer mehrere Batteriezellen aufweisenden Batterie für ein Kraftfahrzeug, bei welchem auf die Batteriezellen eine Wärmeleitpaste aufgebracht wird, über welche die Batteriezellen zumindest thermisch mit einem Kühler zum Kühlen der Batteriezellen gekoppelt werden, wobei bei dem Aufbringen der Wärmeleitpaste eine jeweilige Höheder jeweiligen Batteriezelle erfasst wird, und die Wärmeleitpaste in Abhängigkeit von der jeweiligen erfassten Höhe auf die jeweilige Batteriezelle aufgebracht wird.

Aus dem Stand der Technik ist es demnach bekannt, dass bei einer Traktionsbatterie zwischen einer gekühlten Wand des Gehäuses und Batteriemodulen eine Wärmeleitmasse angeordnet ist. Bei dieser Wärmeleitmasse handelt es sich um einen pastösen Werkstoff mit typischerweise geringer Viskosität, der beim Einsetzen des Batteriemoduls in das Gehäuse der Traktionsbatterie möglichst gleichmäßig zwischen der gekühlten Wand des Gehäuses und dem Batteriemodul verteilt werden soll.

Bei der Montage der Batteriemodule im Gehäuse kann es aufgrund der geringen Viskosität der Wärmeleitmasse beim Verteilen der Wärmeleitmasse zwischen der gekühlten Gehäusewand des Gehäuses und dem Batteriemodul zu Spannungen in der Wärmeleitmasse und zu Verformungen im Bereich der Batteriemodule sowie des Gehäuses kommen. Diese Spannungen sind umso größer, je höher Montagekräfte beim Einsetzten der Batteriemodule ins Gehäuse sind. Dies ist von Nachteil.

Es besteht daher Bedarf an einem Verfahren zum Herstellen einer solchen Traktionsbatterie, welches mit geringen Montagekräften auskommt, um die mechanische Belastung der Batteriemodule sowie des Gehäuses bei der Montage der Traktionsbatterie und demnach beim Herstellen der Traktionsbatterie so gering wie möglich zu halten. Aufgabe der Erfindung ist es, ein neuartiges Verfahren zum Herstellen einer Traktionsbatterie eines Kraftfahrzeugs zu schaffen.

Diese Aufgabe wird nach einem ersten Aspekt der Erfindung durch ein Verfahren zum Herstellen einer Traktionsbatterie eines Kraftfahrzeugs gemäß Anspruch 1 gelöst.

Nach dem ersten Aspekt umfasst das Verfahren zumindest die folgenden Schritte: Bereitstellen des Gehäuses und der Batteriemodule. Vermessen zumindest eines Abschnitts des jeweiligen Batteriemoduls und/oder zumindest eines Abschnitts des Gehäuses. Ermitteln eines Ist-Spalts zwischen dem Batteriemodul und der gekühlten Gehäusewand auf Basis des Vermessens. Ermitteln einer Menge an Wärmeleitmasse abhängig vom ermitteln Ist-Spalt. Auftragen der ermittelten Menge der Wärmeleitmasse auf die gekühlte Gehäusewand und/oder das jeweilige Batteriemodul. Einsetzen des jeweiligen Batteriemoduls in das Gehäuse mit einer definierten Einsetzkraft unter Verteilen der Wärmeleitmasse zwischen dem jeweiligen Batteriemodul und der gekühlten Gehäusewand des Gehäuses.

Nach dem ersten Aspekt wird eine Menge der Wärmeleitmasse, die zwischen dem jeweiligen Batteriemodul und der jeweiligen gekühlten Gehäusewand anzuordnen ist, abhängig von einem ermittelten Ist-Spalt zwischen dem Batteriemodul und der gekühlten Gehäusewand ermittelt, um so exakt die Menge an Wärmeleitmasse zu verwenden, die aufgrund des Ist-Spalts zwischen dem Batteriemodul und der gekühlten Gehäusewand tatsächlich benötigt wird. Zur Bestimmung des Ist-Spalts wird hierbei zumindest ein Abschnitt des jeweiligen Batteriemoduls und/oder zumindest ein Abschnitt des Gehäuses, insbesondere der gekühlten Gehäusewand, vermessen, um abhängig vom Messergebnis den Ist-Spalt zu berechnen. Mit dem ersten Aspekt der Erfindung ist es möglich, die Einsetzkraft beim Einsetzen des Batteriemoduls in das Gehäuse und demnach die Montagekraft zu reduzieren bzw. zu begrenzen.

Nach einem zweiten Aspekt der Erfindung wird diese Aufgabe durch ein Verfahren zum Herstellen einer Traktionsbatterie eines Kraftfahrzeugs gemäß Anspruch 4 gelöst.

Nach dem zweiten Aspekt umfasst das Verfahren zumindest die folgenden Schritte: Bereitstellen des Gehäuses und der Batteriemodule. Auftragen einer definierten Menge der Wärmeleitmasse auf die Gehäusewand und/oder das jeweilige Batteriemodul. Einsetzen des jeweiligen Batteriemoduls in das Gehäuse mit einer definierten Einsetzkraft unter Verteilen der Wärmeleitmasse zwischen dem jeweiligen Batteriemodul und der

Gehäusewand, wobei die Ist-Einsetzkraft messtechnisch erfasst und derart eingestellt wird, dass die Ist-Einsetzkraft entlang eines Einsetzwegs des jeweiligen Batteriemoduls einer Soll-Einsetzkraft entspricht oder innerhalb eines definierten Toleranzbands um Soll-Einsetzkraft liegt.

Nach dem zweiten Aspekt wird die Einsetzkraft, mithilfe derer das jeweilige Batteriemodul in das Gehäuse entlang des Einsetzwegs eingesetzt wird, so eingestellt, dass die Einsetzkraft entlang des Einsetzwegs einer Soll-Einsetzkraft entspricht und diese Soll-Einsetzkraft nicht übersteigt. So kann die Einsetzkraft und damit Montagekraft reduziert werden.

Nach einem dritten Aspekt der Erfindung wird diese Aufgabe durch ein Verfahren zum Herstellen einer Traktionsbatterie eines Kraftfahrzeugs gemäß Anspruch 8 gelöst.

Nach dem dritten Aspekt umfasst das Verfahren zumindest die folgenden Schritte: Bereitstellen des Gehäuses und der Batteriemodule. Auftragen einer definierten Menge der Wärmeleitmasse auf die gekühlte Gehäusewand und/oder das jeweilige Batteriemodul.

Einsetzen des jeweiligen Batteriemoduls in das Gehäuse mit einer definierten Einsetzkraft entlang eines Einsetzwegs bis zum Erreichen einer Einsetzposition am Ende des Einsetzwegs unter Verteilen der Wärmeleitmasse zwischen dem jeweiligen Batteriemodul und der gekühlten Gehäusewand, wobei das Erreichen der Einsetzposition mit einer Lichtmesseinrichtung überwacht wird.

Nach dem dritten Aspekt wird das Erreichen der Einsetzposition am Ende des Einsetzwegs erfasst, um insbesondere am Ende des Einsetzwegs die Einsetzkraft zu begrenzen und abzubauen. Auch hierdurch kann die Montagekraft reduziert werden.

Bevorzugt kommen mindestens zwei der obigen drei Aspekte in Kombination miteinander zum Einsatz, um die Einsetzkraft und damit die Montagekraft beim Herstellen der Traktionsbatterie zu beschränken. Besonders bevorzugt kommen alle drei Aspekte in Kombination miteinander zum Einsatz, um bei der Herstellung der Traktionsbatterie die Einsetzkraft und damit Montagekraft zu begrenzen und so eine mögliche Beschädigung der Batteriemodule und des Gehäuses zu vermeiden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen schematisierten Ausschnitt aus einer erfindungsgemäß herzustellenden Traktionsbatterie eines Kraftfahrzeugs;
- Fig. 2: ein Detail der Fig. 1;
- Fig. 3: ein Kraft-Weg-Diagramm.

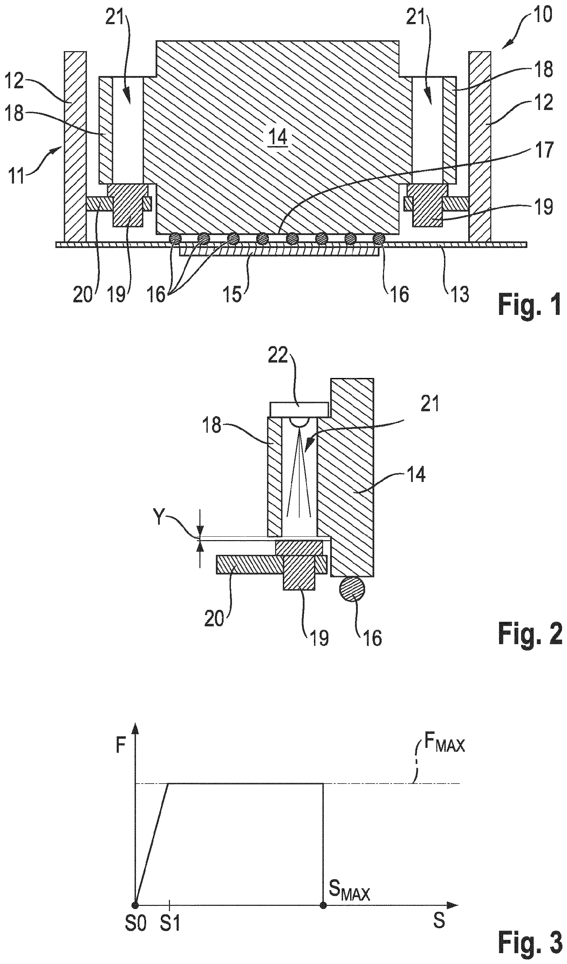

Fig. 1 zeigt einen schematisierten Ausschnitt aus einer Traktionsbatterie 10 eines Kraftfahrzeugs. Die Traktionsbatterie 10 verfügt über ein Gehäuse 11 aus Seitenwänden 12 und einer Bodenwand 13. Zusätzlich kann das Gehäuse über eine in Fig. 1 nicht gezeigte Dachwand bzw. einen Deckel verfügen.

Das Gehäuse verfügt über mehrere Aufnahmebereiche für Batteriemodule 14, wobei in Fig. 1 der Einfachheit halber lediglich ein derartiger Aufnahmeraum gezeigt ist, in den ein Batteriemodul 14 eingesetzt ist. Der Aufnahmebereich ist von den Seitenwänden 12 und der Bodenwand 13 zumindest teilweise begrenzt.

Bei der Bodenwand 13 des Gehäuses 11 der Traktionsbatterie 10 handelt es sich um eine gekühlte Bodenwand 13, wobei Fig. 1 stark schematisiert eine Kühleinrichtung 15 zur Kühlung der Bodenwand 13 zeigt. Typischerweise ist die Bodenwand 13 von Kühlmittel durchströmt und weist dann Strömungskanäle für das Kühlmittel auf. In diesem Fall bilden dann die von Kühlmittel durchströmten Kühlkanäle die Kühleinrichtung 15 aus.

Um die Batteriemodule 14 effektiv zu kühlen, sind die Batteriemodule 14 mit der gekühlten Gehäusewand 13 über eine pastöse Wärmeleitmasse 16 gekoppelt.

Dabei zeigt Fig. 1 die Wärmeleitmasse 16 in einem Zwischenzustand beim Einsetzen des Batteriemoduls 14 in den entsprechenden Aufnahmebereich des Gehäuses 11. Beim Einsetzen wird die pastöse Masse 16 vorzugsweise vollflächig zwischen der gekühlten Gehäusewand 13 und der gegenüberliegenden Wand 17 des jeweiligen Batteriemoduls 14 flächig verteilt, um eine möglichst gute thermische Kopplung des jeweiligen Batteriemoduls 14 mit der gekühlten Gehäusewand 13 bereitzustellen.

Bei der Wärmeleitmasse 16 handelt es sich um eine pastöse Masse mit geringer Viskosität, in der dann, wenn beim Einsetzen des Batteriemoduls 14 eine zu große Einsetzkraft auf das Batteriemodul 14 ausgeübt wird, Spannungen eingebracht werden können.

Infolge dieser Spannungen besteht eine Verformungsgefahr und demnach Beschädigungsgefahr für das jeweilige Batteriemodul 14 und/oder die gekühlte Gehäusewand 13 besteht. Dies gilt es mit der hier vorliegenden Erfindung zu vermeiden. Fig. 1 kann weiterhin entnommen werden, dass das jeweilige Batteriemodul 14 mit seitlichen Befestigungsflanschen 18 bei der Montage im Gehäuse 11 auf Haltern 19 zur Anlage kommt, die in Vorsprüngen 20 der Seitenwände 12 des Gehäuses 11 geführt sind. Bei diesen Haltern 19 handelt es sich insbesondere um Gewindebuchsen, die dem Verschrauben der Batteriemodule 14 mit dem Batteriegehäuse 11 dienen, wobei sich durch Befestigungsöffnungen 21 der Flansche 18 eines jeweiligen Batteriemoduls 14 Befestigungsschrauben hindurch in diese Gewindebuchsen 19 hinein erstrecken, um die Batteriemodule 14 mit dem Gehäuse 11 zu verschrauben.

Um nun die bei der Herstellung bzw. Montage der Traktionsbatterie 10 erforderliche Einsetzkraft bzw. Montagekraft zu reduzieren, wird nach einem ersten Aspekt der hier vorliegenden Erfindung ein Verfahren vorgeschlagen, bei welchem nach dem Bereitstellen des Gehäuses 11 sowie nach dem Bereitstellen der im Gehäuse 11 zu montierenden Batteriemodule 14 ein Vermessen zumindest eines Abschnitts des jeweiligen Batteriemoduls 14 und/oder ein Vermessen zumindest eines Abschnitts des Gehäuses 11, welcher das jeweilige Batteriemodul 14 aufnimmt, durchgeführt wird.

Vorzugsweise wird als Abschnitt des jeweiligen Batteriemoduls 14 ein der gekühlten Gehäusewand 13 zugewandter Abschnitt der Modulwand 17 und/oder als Abschnitt des Gehäuses 11 ein dem jeweiligen Batteriemodul zugewandter Abschnitt der gekühlten Gehäusewand 13 vermessen. Vorzugsweise wird sowohl ein entsprechender Abschnitt der Gehäusewand 13 als auch ein entsprechender Abschnitt des Batteriemoduls 14 vermessen.

Auf Basis der hierbei gewonnenen Messergebnisse wird ein Ist-Spalt ermittelt, der sich bei der Montage des jeweiligen Batteriemoduls 14 im jeweiligen Aufnahmebereich des Gehäuses 11 zwischen dem jeweiligen Batteriemodul 14 und der gekühlten Gehäusewand 13 ausbilden würde.

Auf Grundlage dieses ermittelten Ist-Spalts wird dann eine Menge an Wärmeleitmasse 16 ermittelt, die erforderlich ist, um diesen Ist-Spalt möglichst flächig bzw. vollständig auszufüllen, ohne jedoch eine überschüssige Menge an Wärmeleitmasse 16 in diesen Ist-Spalt einzubringen.

Abhängig von der ermittelten Menge der Wärmeleitmasse 16 wird vor dem Einsetzen des jeweiligen Batteriemoduls 14 in den jeweiligen Aufnahmebereich die Wärmeleitmasse 16 in der entsprechend ermittelten Menge auf den gekühlte Gehäusewand 13 und/oder auf das Batteriemodul 14 aufgebracht. Hierbei kann auch ein Aufbringmuster wie Kreise, Ovale oder Rechtecke für die Wärmeleitmasse 16 auf die gekühlte Gehäusewand 13 und/oder auf das Batteriemodul 14 vorgegeben werden.

Anschließend wird das jeweilige Batteriemodul 14 in den jeweiligen Aufnahmebereich eingesetzt, und zwar mit einer definierten Einsetzkraft unter Verteilen der Wärmeleitmasse 16 zwischen dem jeweiligen Batteriemodul 14 und der gekühlten Gehäusewand 13 des Gehäuses 11.

Da die Menge der je Batteriemodul 14 eingesetzten Wärmeleitmasse 16 exakt auf die Abmessungen des jeweiligen Batteriemoduls 14 bzw. des jeweiligen Abschnitts der gekühlten Gehäusewand 13 angepasst ist, kann die Einsetzkraft und damit Montagekraft reduziert werden, wodurch dann bei der Montage keine Beschädigungsgefahr für das jeweilige Batteriemodul 14 bzw. Gehäuse 11 der Traktionsbatterie besteht.

Nach einem zweiten Aspekt der Erfindung, der vorzugsweise in Kombination mit dem ersten Aspekt der Erfindung zum Einsatz kommt, wird eine sich beim Einsetzen des jeweiligen Batteriemoduls 14 in das Gehäuse 11, nämlich dem jeweiligen Aufnahmebereich des Gehäuses 11, ausbildende Ist-Einsetzkraft messtechnisch erfasst und derart eingestellt, dass die Ist-Einsetzkraft entlang eines Einsetzwegs des jeweiligen Batteriemoduls 14, entlang dessen die Wärmeleitmasse 16 verformt und zwischen dem jeweiligen Batteriemodul 14 und der gekühlten Gehäusewand 13 verteilt wird, einer Soll-Einsetzkraft entspricht oder innerhalb eines definierten Toleranzbands um die Soll-Einsetzkraft liegt.

Hierzu wird zu Beginn des Einsetzwegs, entlang dessen die Wärmeleitmasse 16 verformt und verteilt wird, die Ist-Einsetzkraft zunächst ausgehend von einem Wert von vorzugsweise 0 auf die Soll-Einsetzkraft erhöht, die einer maximal zulässigen Einsetzkraft F_{MAX} entspricht. Fig. 3 zeigt ein Kraft-Weg-Diagramm der Einsetzkraft F über dem Einsetzweg S. Zu Beginn des Einsetzwegs S bei S₀ beträgt die Einsatzkraft F Null und dieselbe wird bis zur Position S₁ des Einsetzwegs S auf die maximal zulässige Einsetzkraft F_{MAX} erhöht. Ausgehend von dieser Position S₁ bis zur Position S_{MAX}, die dem Ende des Einsetzwegs und damit der gewünschten Einsetzposition des Batteriemoduls 14 in das Gehäuse 11 entspricht, wird die Einsetzkraft F vorzugsweise konstant gehalten. Hierzu wird die Ist-Einsetzkraft über dem Einsetzweg S vorzugsweise mit einer Kraft-Weg-Messeinrichtung messtechnisch erfasst und die Ist-Einsetzkraft F über dem Einsetzweg S derart geregelt wird, dass dieselbe entlang des Einsetzwegs bis zum Ende des Einsetzwegs, als bis zum Erreichen der endgültigen Einsetzposition S_{MAX}, konstant gehalten wird.

Hiermit kann dann die Wärmeleitmasse 16 optimal verformt und verteilt werden. Unzulässig große Spannungen in der Wärmeleitmasse 16 werden vermieden. Eine Beschädigungsgefahr für das jeweilige Batteriemodul 14 sowie das Batteriegehäuse 11 wird ebenfalls reduziert.

Nach einem dritten Aspekt der hier vorliegenden Erfindung, der in Kombination mit dem ersten Aspekt und/oder in Kombination mit dem zweiten Aspekt zum Einsatz kommen kann, wird das Einsetzen des jeweiligen Batteriemoduls 14 in das Gehäuse 11 mit der definierten Einsetzkraft F entlang des Einsetzwegs S bis zum Erreichen der Einsetzposition S_{MAX} am Ende des Einsetzwegs S unter Verteilen der Wärmeleitmasse 16 zwischen dem jeweiligen Batteriemodul 14 und der gekühlten Gehäusewand 13 des Gehäuses derart ausgeführt, dass das Erreichen der Einsetzposition S_{MAX} mit einer Lichtmesseinrichtung 22 überwacht wird.

Die Lichtmesseinrichtung 22, die vorzugsweise als Fotodiode ausgeführt ist, überwacht die in eine Befestigungsöffnung 21 des jeweiligen Batteriemoduls 14 einfallende Lichtmenge, wobei die in diese Befestigungsöffnung 21 eintretende Lichtmenge vom Abstand bzw. Spalt Y zwischen der jeweiligen Gewindebuchse 19 und dem angrenzenden Ende des Befestigungsflansches 18, der die jeweilige Befestigungsöffnung 21 aufweist, abhängt. Je geringer dieser Spalt Y ist, desto weniger Licht fällt in die Befestigungsöffnung 21 ein.

Kommt das untere Ende des Befestigungsflanschs 18 auf der Gewindebuchse 19 zur Auflage, und zwar unter Verformung und Verteilung der Wärmeleitmasse 16, so fällt über den Spalt Y keine bzw. so gut wie keine Lichtmenge mehr in die Befestigungsöffnung 21 ein.

Dann, wenn festgestellt wird, dass die in die jeweilige Befestigungsöffnung 21 einfallende Lichtmenge kleiner als ein Grenzwert wird, wird darauf geschlossen, dass das zu montierende Batteriemodul 14 die Einsetzposition S_{MAX} des Einsetzwegs S erreicht hat. Mit Erreichen dieser Einsetzposition wird dann keine weitere Einsetzkraft F auf das Batteriemodul 14 aufgebracht.

Sämtliche drei oben beschriebenen erfindungsgemäßen Aspekte, die alleine oder in beliebiger Kombination miteinander zum Einsatz kommen können, werden voll automatisiert mithilfe eines Roboters durchgeführt.

Beim Einsetzen eines Batteriemoduls 14 in den jeweiligen Aufnahmebereich des Gehäuses 11 kann die Einsetzkraft und damit Montagekraft begrenzt werden. So wird eine Beschädigungsgefahr für die Batteriemodule 14 sowie das Gehäuse 11 reduziert.

## Patentansprüche

1. Verfahren zum Herstellen einer Traktionsbatterie (10) eines Kraftfahrzeugs, wobei die Traktionsbatterie (10) ein Gehäuse (11) und mehrere im Gehäuse (11) aufgenommene Batteriemodule (14) umfasst, und wobei zwischen den Batteriemodulen (14) und einer gekühlten Gehäusewand (13) des Gehäuses (11) eine pastöse Wärmeleitmasse (16) zur thermischen Kopplung der Batteriemodule (14) mit der gekühlten Gehäusewand (13) angeordnet ist,
mit folgenden Schritten:
Bereitstellen des Gehäuses (11) und der Batteriemodule (14),
Vermessen zumindest eines Abschnitts des jeweiligen Batteriemoduls (14) und/oder zumindest eines Abschnitts des Gehäuses (11),
Ermitteln eines Ist-Spalts zwischen dem Batteriemodul (14) und der gekühlten Gehäusewand (13) abhängig vom Vermessen,
Ermitteln einer Menge an Wärmeleitmasse (16) abhängig vom ermittelten Ist-Spalt,
Auftragen der ermittelten Menge der Wärmeleitmasse (16) auf die gekühlte Gehäusewand (13) und/oder das jeweilige Batteriemodul (14), Einsetzen des jeweiligen Batteriemoduls (14) in das Gehäuse (11) mit einer definierten Einsetzkraft unter Verteilen der Wärmeleitmasse (16) zwischen dem jeweiligen Batteriemodul (14) und der gekühlten Gehäusewand (13) des Gehäuses (11).

2. Verfahren nach Anspruch 1, **dadurch gekennzeichnet, dass** als Abschnitt des jeweiligen Batteriemoduls (14) ein der gekühlten Gehäusewand (13) zugewandter Modulwandabschnitt und/oder als Abschnitt des Gehäuses (11) ein dem jeweiligen Batteriemodul (14) zugewandter Abschnitt der gekühlten Gehäusewand (13) vermessen wird.

3. Verfahren nach Anspruch 1 oder 2, **dadurch gekennzeichnet, dass** beim Einsetzen des jeweiligen Batteriemoduls (14) in das Gehäuse (11) eine definierte Einsetzkraft unter Verteilen der Wärmeleitmasse (16) zwischen dem jeweiligen Batteriemodul (14) und der gekühlten Gehäusewand (13) des Gehäuses (11) angewendet wird, wobei die Ist-Einsetzkraft messtechnisch erfasst und derart eingestellt wird, dass die Ist-Einsetzkraft entlang eines Einsetzwegs des jeweiligen Batteriemoduls (14) einer Soll-Einsetzkraft entspricht oder innerhalb eines definierten Toleranzbands um Soll-Einsetzkraft liegt.

4. Verfahren nach Anspruch 3, **dadurch gekennzeichnet, dass** zu Beginn des Einsetzwegs die Ist-Einsetzkraft auf die Soll-Einsetzkraft erhöht und nachfolgend bis zum Ende des Einsetzwegs konstant gehalten wird.

5. Verfahren nach Anspruch 3 oder 4, **dadurch gekennzeichnet, dass** die Ist-Einsetzkraft über dem Einsetzweg mit einer Kraft-Weg-Messeinrichtung messtechnisch erfasst und die Ist-Einsetzkraft über dem Einsetzweg geregelt wird.

6. Verfahren nach einem der Ansprüche 3 bis 5, **dadurch gekennzeichnet, dass** beim Einsetzen des jeweiligen Batteriemoduls (14) in das Gehäuse (11) mit der definierten Einsetzkraft entlang eines Einsetzwegs bis zum Erreichen einer Einsetzposition am Ende des Einsetzwegs unter Verteilen der Wärmeleitmasse (16) zwischen dem jeweiligen Batteriemodul (14) und der gekühlten Gehäusewand (13) des Gehäuses (11) angewendet wird, wobei das Erreichen der Einsetzposition am Ende des Einsetzwegs mit einer Lichtmesseinrichtung (22) überwacht wird.

7. Verfahren nach Anspruch 6, **dadurch gekennzeichnet, dass** als Lichtmesseinrichtung (22) eine Fotodiode verwendet wird.

8. Verfahren nach Anspruch 6 oder 7, **dadurch gekennzeichnet, dass** die Lichtmesseinrichtung (22) die in eine Befestigungsöffnung (21) des jeweiligen Batteriemoduls (14) einfallende Lichtmenge überwacht, wobei dann, wenn die einfallende Lichtmenge kleiner als ein Grenzwert wird, auf das Erreichen der Einsetzposition am Ende des Einsetzwegs geschlossen wird.

## Claims

1. Method for producing a traction battery (10) of a motor vehicle, wherein the traction battery (10) comprises a housing (11) and a plurality of battery modules (14) accommodated in the housing (11), and wherein a pasty thermally conductive compound (16) for thermally coupling the battery modules (14) to a cooled housing wall (13) of the housing (11) is arranged between the battery modules (14) and the cooled housing wall (13),
comprising the following steps:
providing the housing (11) and the battery modules (14),
measuring at least one section of the respective battery module (14) and/or at least one section of the housing (11),
determining an actual gap between the battery module (14) and the cooled housing wall (13) depending on the measurement,
determining a quantity of thermally conductive compound (16) depending on the determined actual gap,
applying the determined quantity of thermally conductive compound (16) to the cooled housing wall (13) and/or the respective battery module (14),
inserting the respective battery module (14) into the housing (11) with a defined insertion force, with the thermally conductive compound (16) being distributed between the respective battery module (14) and the cooled housing wall (13) of the housing (11).

2. Method according to Claim 1, **characterized in that** a module wall section facing the cooled housing wall (13) is measured as a section of the respective battery module (14) and/or a section of the cooled housing wall (13) facing the respective battery module (14) is measured as a section of the housing (11).

3. Method according to Claim 1 or 2, **characterized in that**, when the respective battery module (14) is inserted into the housing (11), a defined insertion force is applied so as to distribute the thermally conductive mass (16) between the respective battery module (14) and the cooled housing wall (13) of the housing (11),
wherein the actual insertion force is detected by measurement and is set in such a way that the actual insertion force along an insertion path of the respective battery module (14) corresponds to a setpoint insertion force or lies within a defined tolerance range around the setpoint insertion force.

4. Method according to Claim 3, **characterized in that**, at the beginning of the insertion path, the actual insertion force is increased to the setpoint insertion force and subsequently is kept constant until the end of the insertion path.

5. Method according to Claim 3 or 4, **characterized in that** the actual insertion force is detected by measurement over the insertion path by a force/travel measuring device and the actual insertion force is controlled over the insertion path.

6. Method according to one of Claims 3 to 5, **characterized in that**, when the respective battery module (14) is inserted into the housing (11) with the defined insertion force is applied along an insertion path until an insertion position at the end of the insertion path is reached so as to distribute the thermally conductive compound (16) between the respective battery module (14) and the cooled housing wall (13) of the housing (11), wherein the situation of the insertion position at the end of the insertion path being reached is monitored by a light measuring device (22).

7. Method according to Claim 6, **characterized in that** a photodiode is used as the light measuring device (22).

8. Method according to Claim 6 or 7, **characterized in that** the light measuring device (22) monitors the quantity of light incident into a fastening opening (21) of the respective battery module (14), wherein, when the incident quantity of light is lower than a limit value, it is concluded that the insertion position at the end of the insertion path has been reached.

## Revendications

1. Procédé, destiné à fabriquer une batterie de traction (10) d'un véhicule automobile, la batterie de traction (10) comprenant un carter (11) et plusieurs modules (14) de batterie réceptionnés dans le carter (11), et entre les modules (14) de batterie et une paroi de carter (13) refroidie du carter (11) étant placée une composition thermoconductrice (16) pâteuse, assurant la connexion thermique des modules (14) de batterie avec la paroi de carter (13) refroidie,
avec les étapes suivantes, consistant à :
mettre à disposition le carter (11) et les modules (14) de batterie,
mesurer au moins un segment du module (14) de batterie concerné et / ou au moins un segment du carter (11),
déterminer une fente réelle entre le module (14) de batterie et la paroi de carter (13) refroidie, en fonction du mesurage,
déterminer une quantité de composition thermoconductrice (16) en fonction de la fente réelle déterminée, appliquer la quantité déterminée de la composition thermoconductrice (16) sur la paroi de carter (13) refroidie et / ou sur le module (14) de batterie concerné,
insérer le module (14) de batterie concerné dans le carter (11) avec une force d'insertion définie, en répartissant la composition thermoconductrice (16) entre le module (14) de batterie concerné et la paroi de carter (13) refroidie du carter (11).

2. Procédé selon la revendication 1, **caractérisé en ce qu'**en tant que segment du module (14) de batterie concerné, l'on mesure un segment de la paroi de module qui fait face à la paroi de carter (13) refroidie et / ou en tant que segment du carter (11), l'on mesure un segment de la paroi de carter (13) refroidie qui fait face au module (14) de batterie concerné.

3. Procédé selon la revendication 1 ou 2, **caractérisé en ce que** lors de l'insertion du module (14) de batterie concerné dans le carter (11), l'on applique une force d'insertion définie en répartissant la composition thermoconductrice (16) entre le module (14) de batterie concerné et la paroi de carter (13) refroidie du carter (11),
la force d'insertion réelle étant détectée par métrologie, et réglée de telle sorte que la force d'insertion réelle le long d'un trajet d'insertion du module (14) de batterie concerné corresponde à une force d'insertion de consigne ou se situe dans une plage d tolérance définie autour de la force d'insertion de consigne.

4. Procédé selon la revendication 3, **caractérisé en ce qu'**au début du trajet d'insertion, la force d'insertion réelle augmente jusqu'à la force d'insertion de consigne et reste constante par la suite, jusqu'à la fin du trajet d'insertion.

5. Procédé selon la revendication 3 ou 4, **caractérisé en ce que** sur le trajet d'insertion, l'on détecte par métrologie la force d'insertion réelle avec un système de mesure force / déplacement et **en ce que** l'on régule la force d'insertion réelle sur le trajet d'insertion.

6. Procédé selon l'une quelconque des revendications 3 à 5, **caractérisé en ce que** lors de l'insertion du module (14) de batterie concerné dans le carter (11) avec l'on applique la force d'insertion définie, le long d'une distance d'insertion jusqu'à l'atteinte d'une position d'insertion à la fin du trajet d'insertion, en répartissant la composition thermoconductrice (16) entre le module (14) de batterie concerné et la paroi de carter (13) refroidie du carter (11),
l'atteinte de la position d'insertion à la fin du trajet d'insertion étant supervisée à l'aide d'un système de mesure de la lumière (22).

7. Procédé selon la revendication 6, **caractérisé en ce qu'**en tant que système de mesure de la lumière (22) l'on utilise une photodiode.

8. Procédé selon la revendication 6 ou 7, **caractérisé en ce que** le système de mesure de la lumière (22) supervise la quantité de lumière incidente dans un orifice de fixation (21) du module (14) de batterie concerné, étant conclu que la position d'insertion est atteinte à la fin du trajet d'insertion lorsque la quantité de lumière incidente est inférieure à une valeur limite.
